# EUROPEAN PATENT SPECIFICATION

(11) **EP 0 911 542 B1**
(45) Date of publication and mention of the grant of the patent: **18.09.2002**
(21) Application number: 98203524.8
(22) Date of filing: 21.10.1998
(51) Int. Cl.: F16H 25/20, H01H 3/26

(54) **Linear actuator with manual or motor drive**
Lineare Antriebsvorrichtung mit Hand- oder Motorantrieb
Actuateur linéaire avec entraînement manuel ou par moteur

(30) Priority: 21.10.1997 IT MI972371
(43) Date of publication of application: 28.04.1999
(73) Proprietor: ABB SACE SPA, I-24100 Bergamo (IT)
(72) Inventor: Bellon, Eduardo, 24011 Almè (BG) (IT)
(74) Representative: Giavarini, Francesco

(56) References cited:
- FR-A- 2 746 002
- US-A- 2 541 529
- US-A- 5 024 124
- PATENT ABSTRACTS OF JAPAN vol. 199, no. 711, 28 November 1997 (1997-11-28) & JP 09 191611 A (AICHI ELECTRIC CO LTD), 22 July 1997 (1997-07-22)

## Description

The present invention relates to a device for the translatory motion of a frame of structures in general and of electrical circuit breakers in particular, with manual and motorized actuation.

It is known that in many fields and particularly in some types of electrical circuit breakers it is necessary to produce a translatory motion of a frame, connected for example to the electric contacts, with respect to a fixed structure.

Currently conventional solutions entail performing a manual actuation through a lot of different kinematic systems or having an actuation system motorized by means of an electric motor.

If both kinds of actuation, i.e., the motorized one and the manual one, are present, it is necessary to disengage one type of actuation in order to be able to use the other type of actuation.

Generally, this solution is mechanically complicated, since two distinct functional assemblies are present which do not mutually interact, and further requires specific actions in order to use one type of actuation system or the other. FR-A-2746002 discloses a device from which the subject-matter of claim 1 differs by the kinematic invention regarding manual and motorized operation., The aim of the invention is to eliminate the above drawbacks, providing a different concept regarding a device for the translatory motion of a frame of structures in general and of electrical circuit breakers in particular, with manual and motorized actuation, in which it is possible to pass from one type of actuation to the other without having to perform preliminary disengagements.

Within the scope of the above aim, a particular object of the invention is to provide a device which, even if it allows to have both kinds of actuation, has a simple structure which does not modify the general manufacturing criteria of, for example, the electrical circuit breaker to which it is applied.

A further object of the present invention is to provide a device which, by way of its particular constructive characteristics, is capable of giving the largest possibilities of reliability and safety in use.

A further but not last object of the present invention is to provide a device for the translatory motion of a frame of structures in general and of electrical circuit breakers in particular which can be obtained easily starting from commonly commercially available elements and materials and is also competitive from a purely economic point of view.

This aim, these objects and others which will become apparent hereinafter are achieved by a device for the translatory motion of a frame of structures in general and of electrical circuit breakers in particular, with manual and motorized actuation, according to the invention, comprising a movable frame which is slidingly associated with a fixed structure, a threaded bar which is arranged in the sliding direction and is rotatably supported by said fixed structure and a female thread engaging said threaded bar and being rotatably supported by said movable frame, wherein in order to produce the translatory motion with manual actuation, said threaded bar being rotated and said female thread being fixed with respect to said movable frame and in the case of motorized actuation, said threaded bar being fixed with respect to said fixed structure and said female thread rotating with respect to said movable frame.

Contrary thereto, the threaded bar according to FR-A-2 746 002 is rotated during motorized actuation and is fixed during manual operation of the device, its female thread being fixed during motorized activation while rotating during manual operation.

Further characteristics and advantages of the present invention will become apparent from the following detailed description of a preferred but not exclusive embodiment of a device for the translatory motion of a frame of structures in general and of electrical circuit breakers in particular, with manual and motorized actuation, illustrated by way of non-limitative example in the accompanying drawings, wherein:

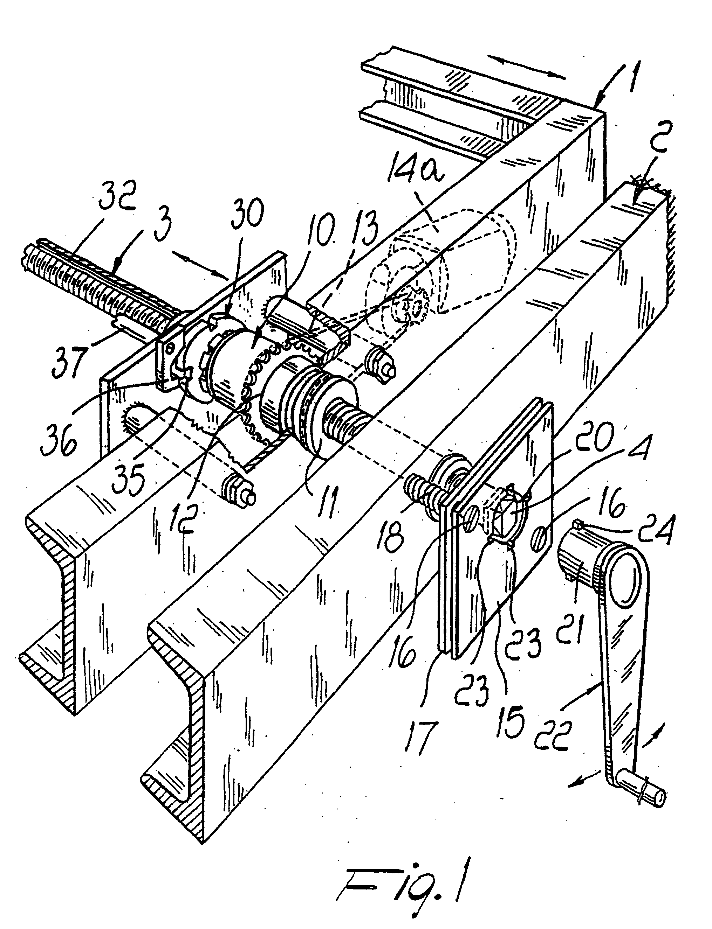

Figure 1 is a schematic perspective view of the device according to the invention;
Figure 2 is a partially cutout and perspective view of the detail of the region for the connection of the manual actuation crank;

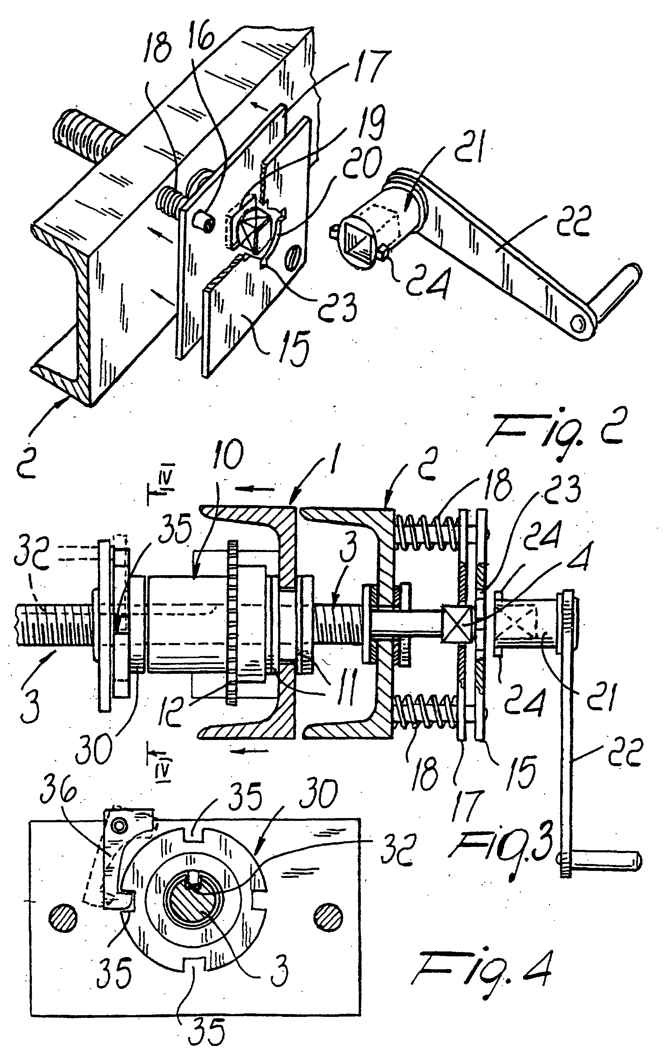

Figure 3 is a sectional view of the device of the invention in the inactive position;

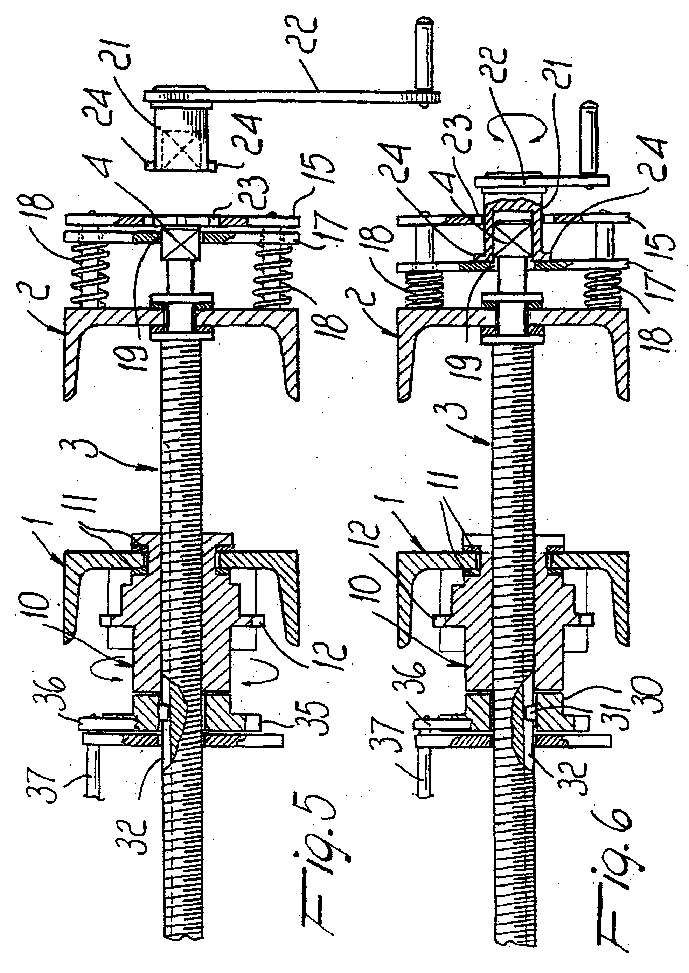

Figure 4 is a sectional view, taken along the plane IV-IV of Figure 3;
Figure 5 is a schematic sectional view of the device during motorized actuation;
Figure 6 is a schematic sectional view of the device during crank-operated actuation.

With reference to the above figures, the device for the translatory motion of a frame of structures in general and of electrical circuit breakers in particular, with manual and motorized actuation, according to the invention, comprises a movable frame, generally designated by the reference numeral 1, which can be constituted for example by the sliding unit of an electrical circuit breaker or the like.

The movable frame is slidingly associated with a fixed frame, generally designated by the reference numeral 2.

The device further comprises a threaded bar 3 which is rotatably supported by the fixed structure and is orientated in the sliding direction.

The threaded bar ends, at one end arranged outside the structure 2, with a square pin which is generally designated by the reference numeral 4.

A female thread 10 rotatably engages the threaded bar and is rotatably supported by the movable frame 1, for example by means of thrust bearings 11.

A sprocket 12 is rigidly coupled to the female thread 10, and a chain 13 winds around it; said chain 13 is actuated by the driving sprocket 14 of a gearmotor 14a which is supported by the movable frame.

At the front, on the side of the fixed structure 2, there is a fixed front plate 15 which is connected to the fixed structure 2 by means of posts 16 whereon a movable front plate 17 slidingly engages. The front plate 17 is pushed by elastic pusher means 18, provided by means of a helical spring, which make the square hole 19 of the plate 17 engaging the square pin 4 in order to prevent the rotation of the threaded bar 3.

The fixed front plate 15 is provided with a circular opening 20 in which it is possible to insert the tang 21 of a crank 22.

The circular opening 20 is further provided with notches 23 which are angularly spaced by 90° and in which corresponding protrusions 24 of the tang 21 of the crank 22 engage, so as to allow the insertion and extraction of the crank from the square pin 4 only in preset angular positions corresponding to the position in which the square hole 19 engages the square pin 4.

The particularity of the invention is constituted by the fact that when manual actuation is performed, in order to produce the translatory motion, the threaded bar 3 is rotated with respect to the structure 2, while the female thread 10 is rotationally fixed with respect to the movable frame, since the gearmotor 14a, by having an irreversible transmission, keeps the female thread motionless, so that sliding occurs when the threaded bar rotates.

In order to turn the threaded bar, the insertion of the tang 21 of the crank 22 produces the translatory motion of the movable plate 17 in contrast with the springs 18 and accordingly disengages the square pin 4 from the square hole 19, thus allowing the threaded bar to rotate.

When motorized actuation is performed, since the crank 22 is extracted from the movable plate 17, the threaded bar 3 is fixed in position with respect to the fixed structure 2 and accordingly the rotation of the female thread, performed by actuating the gearmotor, produces a translatory motion of the movable frame with respect to the threaded bar.

The above-described arrangement therefore provides a new concept in the construction of devices which can be actuated both manually and by means of a motor drive, since, in case of manual actuation the threaded bar is rotated and the female thread is fixed, while, in the case of motorized actuation, the female thread rotates and the threaded bar is automatically fixed, achieving in both cases, without having to perform additional interventions, the translatory motion of the movable frame whereon both the female thread and its actuation gearmotor are supported.

It should be added that it is possible to provide a hub 30 which is arranged on the axial extension of the female thread, which is not connected to it, and which is provided with a tab 31 which engages a longitudinal slot 32 of the threaded bar 3, so as to rotate synchronously with said bar.

The hub 30 has, in its peripheral region, seats 35 in which it is possible to insert a locking detent 36 which, by means of a rod-like element 37 or other kinematic systems, can be connected to the control of the circuit breaker, so as to prevent the rotation of the hub, and accordingly, of the threaded bar, for example, when the circuit breaker is in the closed position.

From the above description it is evident that the invention achieves the intended aims and objects and in particular that a device is provided in which transition from manual actuation to motorized actuation occurs automatically, in practice by using the presence of the threaded bar, which can be rotationally locked in case of motorized operation, whereas the female thread is rotationally locked in case of manual actuation.

The invention thus conceived is susceptible of numerous modifications and variations, all of which are within the scope of the inventive concept, as defined by the appended claims.

## Claims

1. Device for the translatory motion of a frame of structures in general and of electrical circuit breakers in particular, with manual and motorized actuation, comprising a movable frame which is slidingly associated with a fixed structure, a threaded bar which is arranged in the sliding direction and is rotatably supported by said fixed structure and a female thread engaging said threaded bar and being rotatably supported by said movable frame; wherein in order to produce the translatory motion with manual actuation, said threaded bar being rotated and said female thread being fixed with respect to said movable frame and, in the case of motorized actuation, said threaded bar being fixed with respect to said fixed structure and said female thread rotating with respect to said movable frame.

2. Device according to claim 1, **characterized in that** it comprises, at one end of said threaded bar which is external with respect to said fixed structure, a square pin which can be engaged by means of a manual actuation crank.

3. Device according to one or more of the previous claims, **characterized in that** it comprises a sprocket which is rigidly associated with said female thread and is connected to motor means which are constituted by a gearmotor supported by said movable frame.

4. Device according to one or more of the previous claims, **characterized in that** it comprises, in a front region, on said fixed structure, a fixed front plane and a movable front plate which is slideable with respect to said fixed front plate through the action of, and in contrast with, elastic pusher means, said movable front plate forming a square hole which can be engaged with said square pin in order to detachably prevent the rotation of said threaded bar.

5. Device according to one or more of the previous claims, **characterized in that** said fixed front plate forms an opening with seats which are angularly offset by 90° and can engage corresponding protrusions of the tang of said manual actuation crank to allow the disengagement and engagement of said crank with respect to said square pin exclusively in preset angular positions which correspond to the position in which the square hole of said movable plate can be engaged by said square pin.

6. Device according to one or more of the previous claims, **characterized in that** when said threaded bar is engaged by said crank, said gearmotor is adapted to act as an element for locking the rotation of said female thread; said female thread being suitable to perform a translatory motion along said threaded bar when said threaded bar is actuated.

7. Device according to one or more of the previous claims, **characterized in that** in case of motorized actuation, when said threaded bar is kept rotationally locked by the engagement of said square pin in said square hole, said female thread, actuated by
said motor means, rotates and performs a translatory motion with respect to said threaded bar.

## Patentansprüche

1. Vorrichtung für die translatorische Bewegung eines Rahmens von Strukturen im allgemeinen und elektrischen Leistungsschaltern im besonderen, mit Hand- und Motorbetätigung, mit einem beweglichen Rahmen, der verschiebbar mit einer feststehenden Struktur verbunden ist, einer Gewindestange, die in Gleitrichtung angeordnet und drehbar von der feststehenden Struktur gehalten ist, und einem Innengewinde, das mit der Gewindestange in Eingriff steht und drehbar von dem beweglichen Rahmen gehalten ist, wobei zum Erzeugen der translatorischen Bewegung mit manueller Betätigung die Gewindestange gedreht wird und das Innengewinde bezüglich des beweglichen Rahmens fest ist und bei motorisierter Betätigung die Gewindestange bezüglich der feststehenden Struktur fest ist und sich das Innengewinde bezüglich des beweglichen Rahmens dreht.

2. Vorrichtung nach Anspruch 1, **dadurch gekennzeichnet, daß** sie an einem Ende der Gewindestange, das bezüglich der feststehenden Struktur außen liegt, einen quadratischen Stift hat, mit dem eine Kurbel zur manuellen Betätigung in Eingriff treten kann.

3. Vorrichtung nach einem oder mehreren der vorhergehenden Ansprüche, **dadurch gekennzeichnet, daß** sie ein Kettenrad hat, das starr an dem Innengewinde befestigt und mit Motormitteln verbunden ist, die aus einem von dem beweglichen Rahmen getragenen Getriebemotor bestehen.

4. Vorrichtung nach einem oder mehreren der vorhergehenden Ansprüche, **dadurch gekennzeichnet, daß** sie in einem Frontbereich an der feststehenden Struktur eine feste Frontplatte und eine bewegliche Frontplatte enthält, die durch die Wirkung von und entgegen elastischen Schubmitteln bezüglich der festen Frontplatte verschiebbar ist, wobei die bewegliche Frontplatte eine quadratische Öffnung ausbildet, in die der quadratische Stift eingreifen kann, um die Drehung der Gewindestange lösbar zu verhindern.

5. Vorrichtung nach einem oder mehreren der vorhergehenden Ansprüche, **dadurch gekennzeichnet, daß** die feste Frontplatte eine Öffnung mit Sitzen ausbildet, die in 90°-Winkeln beabstandet angeordnet sind und mit entsprechenden Vorsprüngen des Mitnehmers der Kurbel für manuelle Betätigung in Eingriff treten können, um das Lösen der Kurbel von dem quadratischen Stift und das Eingreifen der Kurbel mit diesem nur in vorbestimmten Winkelstellungen zu ermöglichen, die der Stellung entsprechen, in der der quadratische Stift in die quadratische Öffnung der beweglichen Platte eingreifen kann.

6. Vorrichtung nach einem oder mehreren der vorhergehenden Ansprüche, **dadurch gekennzeichnet, daß**, wenn die Gewindestange mit der Kurbel in Eingriff steht, der Getriebemotor geeignet ist, als Element zum Sperren der Drehung des Innengewindes zu wirken, wobei das Innengewinde geeignet ist, eine translatorische Bewegung entlang der Gewindestange auszuführen, wenn die Gewindestange betätigt wird.

7. Vorrichtung nach einem oder mehreren der vorhergehenden Ansprüche, **dadurch gekennzeichnet, daß** bei Motorbetätigung, wenn die Gewindestange durch den Eingriff des quadratischen Stifts in die quadratische Öffnung gegen Drehung gesperrt ist, sich das Innengewinde betätigt durch die Motormittel dreht und eine translatorische Bewegung bezüglich der Gewindestange ausführt.

## Revendications

1. Dispositif pour le déplacement en translation d'un châssis de structures en général et de disjoncteurs électriques en particulier, avec entraînement manuel et par moteur, comprenant un châssis mobile associé à coulissement à une structure fixe, une barre filetée disposée dans la direction du coulissement et supportée à rotation, par la structure fixe, et un filetage femelle, dans lequel s'engage la barre filetée, et supporté par ledit châssis mobile, dans lequel, pour effectuer le déplacement en translation par entraînement manuel, ladite barre filetée tourne et ledit filetage femelle est fixe par rapport audit châssis mobile, et dans le cas d'un entraînement par moteur, ladite barre filetée est fixe par rapport à ladite structure fixe et ledit filetage femelle tourne par rapport audit châssis mobile.

2. Dispositif selon la revendication 1, **caractérisé en ce qu'**il comprend, à l'extrémité de la barre filetée située à l'extérieur par rapport à ladite structure fixe, une broche carrée, pouvant être actionnée au moyen d'une manivelle d'entraînement manuel.

3. Dispositif selon une ou plusieurs des revendications précédentes, **caractérisé en ce qu'**il comprend un pignon rigidement associé au filetage femelle et relié à des moyens moteurs constitués par un moto-réducteur supporté par ledit châssis mobile.

4. Dispositif selon une ou plusieurs des revendications précédentes, **caractérisé en ce qu'**il comprend, dans une zone avant de ladite structure fixe, une plaque frontale fixe et une plaque frontale mobile, qui peut coulisser par rapport à ladite plaque frontale fixe sous l'action de moyens élastiques de poussée et en direction opposée à l'action de ceux-ci, ladite plaque mobile comprenant un orifice carré dans lequel peut s'engager ladite broche carrée pour empêcher de manière réversible la rotation de ladite barre filetée.

5. Dispositif selon une ou plusieurs des revendications précédentes, **caractérisé en ce que** ladite plaque frontale fixe forme une ouverture avec des logements qui sont espacés angulairement de 90°, et peuvent recevoir des ergots correspondants de l'embout de ladite manivelle d'entraînement manuel, pour permettre le désengagement et l'engagement de ladite manivelle, de ladite broche carrée, par rapport à ladite broche carrée, exclusivement dans des positions angulaires déterminées, correspondant aux positions dans lesquelles l'orifice carré de ladite plaque mobile peut être engagé sur ladite broche carrée.

6. Dispositif selon une ou plusieurs des revendications précédentes, **caractérisé en ce que**, lorsque ladite barre filetée est engagée par ladite manivelle, le moto-réducteur agit comme un élément de blocage de la rotation dudit filetage femelle ; ledit filetage femelle étant capable d'effectuer un mouvement de translation le long de ladite barre filetée lorsque ladite barre filetée est entraînée.

7. Dispositif selon une ou plusieurs des revendications précédentes, **caractérisé en ce que**, en cas d'entraînement par moteur, lorsque la barre filetée est bloquée dans sa rotation par l'engagement de la broche carrée dans ledit orifice carré, ledit filetage femelle entraîné par lesdits moyens moteurs, tourne et effectue un mouvement de translation par rapport à ladite barre filetée.
